# EUROPEAN PATENT SPECIFICATION

(11) **EP 1 708 459 B1**
(45) Date of publication and mention of the grant of the patent: **20.08.2008**
(21) Application number: 05300226.7
(22) Date of filing: 29.03.2005
(51) Int. Cl.: H04L 29/08

(54) **Routing element with special functions**
Router mit speziellen Funktionen
Routeur avec fonctions spéciales

(43) Date of publication of application: 04.10.2006
(73) Proprietor: Hewlett-Packard Development Company, L.P., Houston, TX 77070 (US)
(72) Inventor: Wassifi, Hamid, 38053, Grenoble Cedex 09 (FR); Bouckaert, Philippe, 38053, Grenoble Cedex 09 (FR); Anslot, Michel, 38053, Grenoble Cedex 09 (FR)
(74) Representative: Lloyd, Richard Graham

(56) References cited:
- WO-A-20/04102992
- US-A1- 2002 105 969
- US-B1- 6 704 873
- GBURZYNSKI P ET AL: "A simple and scalable architecture for rapidly expandable networks" SYSTEM SCIENCES, 1994. VOL. I: ARCHITECTURE, PROCEEDINGS OF THE TWENTY-SEVENTH HAWAII INTERNATION CONFERENCE ON WAILEA, HI, USA 4-7 JAN. 1994, LOS ALAMITOS, CA, USA,IEEE COMPUT. SOC, 4 January 1994 (1994-01-04), pages 481-490, XP010096922 ISBN: 0-8186-5050-8

## Description

### Description of the Invention

This invention relates to a routing element, a method of passing messages and a communications network.

### Background of the Invention

US 2002/0105969 discloses a radio access network gateway that converts ATM protocol messages from a radio network controller to non-ATM based protocols of a core network. Preferably, the non-ATM based protocols are IP and SCTP based protocols. This greatly simplifies the network entities that are used to realise the core network. Rather than any such entities having to be compatible with complex and expensive ATM protocols, they are be designed to be compatible with simple and inexpensive protocols such as for example, SUA over SCTP/IP or TCP/IP.

A common problem when connecting networks is that of ensuring messages from one network are correctly routed to a destination on the other network. A particular example of this is in the connection of networks using Internet Protocol (IP) to the existing telephone switched circuit network (PSTN). The infrastructure uses very different technologies and protocol: for example a PSTN uses the SS7 protocol, and it is desirable to provide PSTN signalling over an IP network reliably.

An approach to providing a reliable connection between IP and SS7 networks has been proposed by the Internet Engineering Task Force (IETF). This includes M3UA, which is a protocol for the transport of any MTP3-user signalling over IP and SUA which defines the protocol for the transport of any SCCP user signalling over IP. Two main entities are defined: the signalling gateway ("SG"), which is the connection point between the SS7 and IP networks, and the application server (AS) which is the software application provided on the IP network which it is desired to make available over the SS7 network. The protocols may be used to connect SS7-based signalling end points (SEP) with an IP based AS thus allowing SS7 networks to access IP based applications.

A function performed by the signalling gateway is to receive SS7 signalling messages and direct them to the appropriate AS. To do so, the SG identifies a routing key (RK) defined by the M3UA or SUA protocol, which uniquely identifies the AS in accordance with parameters in the SS7 message. In general, the RK parameters are found in the header of the SS7 message, although it may be desirable to take into account other elements of the message, such as a SMS originating number or even some aspect of the message content, in order to direct the message to the appropriate AS.

Under the M3UA protocol, the signalling gateway may also host some specific services that perform an intermediate operation such as altering or screening messages. Depending on the application provided by an application server, it may be desirable to route all messages intended for an application server through a signalling gateway which can provide these intermediate operations. However, because the M3UA protocol permits multiple application servers and signalling gateways to communicate over an IP network where messages for any application server can go through any signalling gateway, it would be necessary to provide each signalling gateway with the capability to perform the intermediate operation to process all messages intended for the particular application server.

### Summary of the Invention

Accordingly a first aspect of the invention provides a routing element as claimed in claim 1 A second aspect of the invention provides a method as claimed in claim 9. A third aspect of the invention provides a communication network as claimed in claim 8.

### Brief Description of the Drawings

An embodiment of the invention will now be described by way of example only with reference to the accompanying drawings wherein:
Figure 1 is a diagrammatic illustration of a conventional network,
Figure 2 is a diagrammatic illustration of the protocol stack of the network of Figure 1,
Figure 3 is a diagrammatic illustration of a network embodying the present invention,
Figure 4 shows a protocol stack associated with the network of figure 3,
figure 5 is a flow diagram of a method embodying the present invention,
Figure 6 shows a first message sequence of the network of Figure 3,
Figure 7 illustrates a second message sequence of the network of Figure 3.

### Detailed Description of the Preferred Embodiments

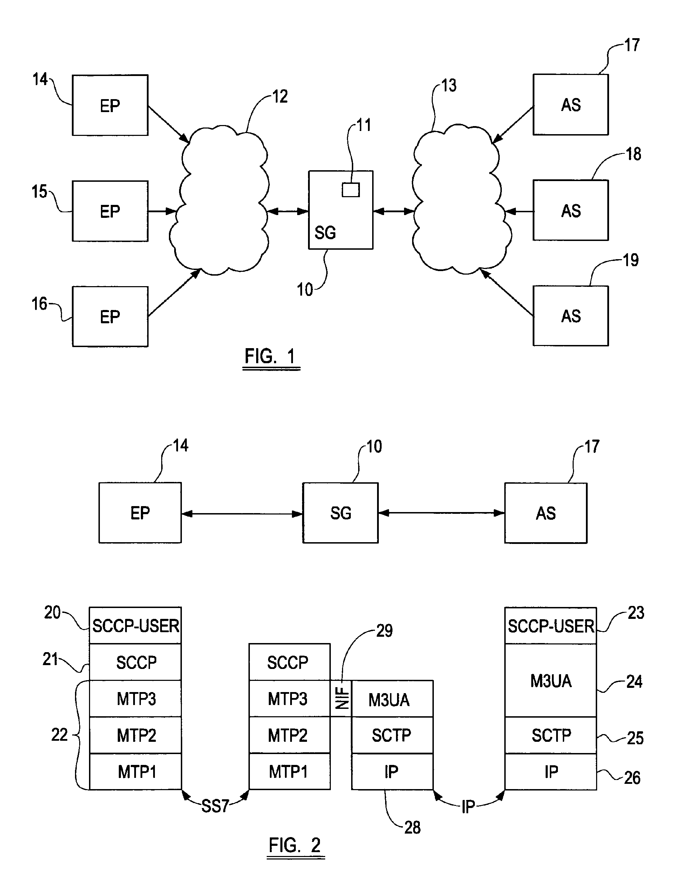

Referring to Figure 1, a signalling gateway is shown at 10, provided with a routing key interpreter 11. The signalling gateway 10 is operable to communicate over a first network 12 and send and receive messages to and from end points 14, 15, 16 on the network 12 using a first protocol, in this example using the SS7 protocol. The signalling gateway 10 is also able to communicate over the second network 13, in this example using the IP protocol. The signalling gateway 10 is operable to exchange messages via the first network 12 with a plurality of end points 14, 15, 16, and to exchange messages over the second network 13 with a plurality of application servers 17, 18, 19. As best seen in Figure 2, the protocols used for transmitting messages over the first network 12 comprises a Signalling Connection Control Part (SCCP) user part 20 over SCCP 21 and then the appropriate Message Transfer Protocol (MTP) levels shown at 22. The application servers transmit messages using an SCCP user part shown at 23 over an MTP3 user adaptation layer (M3UA) 24, and use the Stream Control Transmission Protocol (SCTP) 25 over the Internet Protocol (IP) layer 26. The signalling gateway architecture generally shown at 28 has a nodal interworking function (NIF) illustrated at 29 to convert SS7 messages to M3UA messages and vice versa using the routing key interpreter generally indicated at 11. The signalling gateway 10 may sit between any appropriate pair of protocols as desired. For example, the signalling gateway 10 may be operable to convert SS7 signals to M3UA messages or otherwise as desired.

Each application server 17, 18, 19 has a unique routing key associated with it. The routing keys may be configured statically at the application server and at the signalling gateway, or may be configured statically at the application server, which then dynamically registers itself at the signalling gateway by means of routing key management messages. To match a routing key to an incoming message, the routing key interpreter 11 is operable to read a message and identify the values of certain parameters within the message. The routing key interpreter then identifies the routing key that matches the values of the parameters and returns the appropriate destination information.

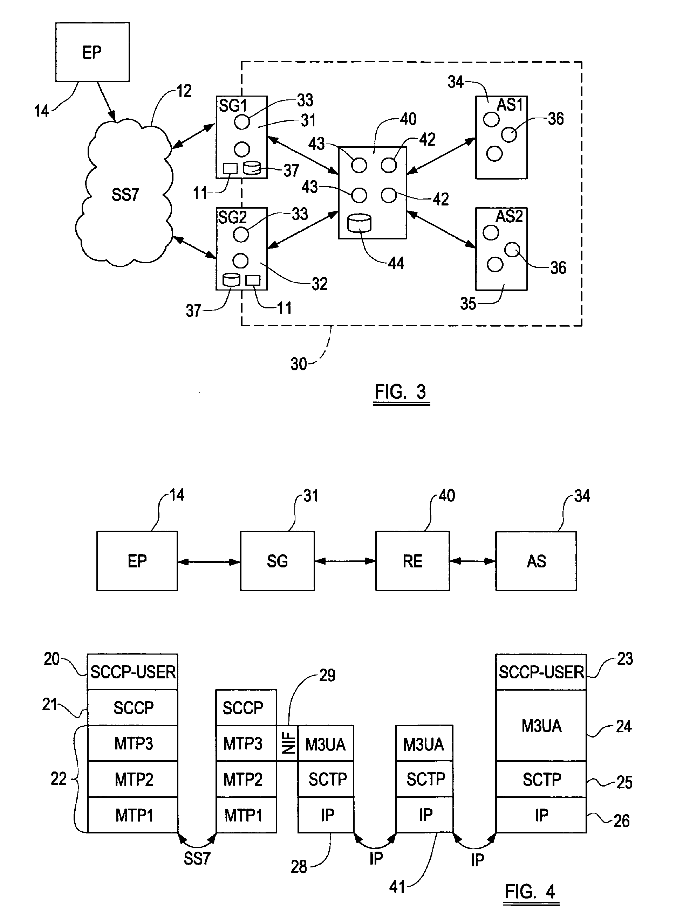

Referring now to Figures 3 and 4, a communications network embodying the present invention is generally shown at 30. The network 30 includes a first signalling gateway 31 and a second signalling gateway 32, each of which is functionally the same as signalling gateway 10 of Figure 1 and operable to pass messages between the SS7 network 12 and the IP network 30. Each of the signalling gateways 31, 32 has one or more signalling gateway processes 33. The network 30 further comprises a first application server 34 and, optionally, a second application server 35, each of which has a plurality of application server processes 36. For clarity, only one end point 14 is shown connected to the SS7 network 12.

The network 30 further comprises a routing element generally shown at 40 which is operable to pass messages between the signalling gateways 31, 32 and the application servers 34, 35 as will be discussed in more detail below. The protocol stack of the routing element 40 is shown at 41, and, in this example, the routing element will use the M3UA protocol to forward messages using the Stream Control Transmission Protocol (SCTP) over an Internet Protocol (IP) layer Communication within the IP network 30. It is thus between equivalent entities that all use the M3UA protocol. The routing element 40 again has a plurality of processes 42, 43. The processes 42 comprise routing element gateway processes and are configured such that SCTP associations are configured between a routing element gateway process 42 and a corresponding application server process 36. Similarly, the processes 43 comprise routing element application server processes that are operable to be associated with a corresponding signalling gateway process 33.

To enable messages to be routed to the correct application server, each of the signalling gateways 31, 32 has a routing key interpreter 11 as discussed in relation to Figure 1 above, and a routing key store 37. The routing element 40 similarly comprises a store 44 to hold routing contexts and destination information, corresponding to each routing context, identifying the corresponding signalling gateway process 33 and application server process 36. The routing key and routing context information held in the stores 37, 44 may be provided statically as part of the configuration of the signalling gateways 31, 32 and routing element 40 and alternatively or additionally may be provided dynamically using the routing key registration messages under the M3UA protocol as will be discussed in more detail below.

The signalling gateways 31, 32 thus function as standard signalling gateways. Hence, each of the signalling gateways 31, 32 may also be operable to forward messages directly to other application servers (not shown) in accordance with routing keys for those application servers held in the routing key store 37. The application servers 34, 35 similarly function as conventional application servers except that each of the application servers 34, 35 is configured to view the routing element 40 as a signalling gateway and only to route outbound messages to the routing element 40.

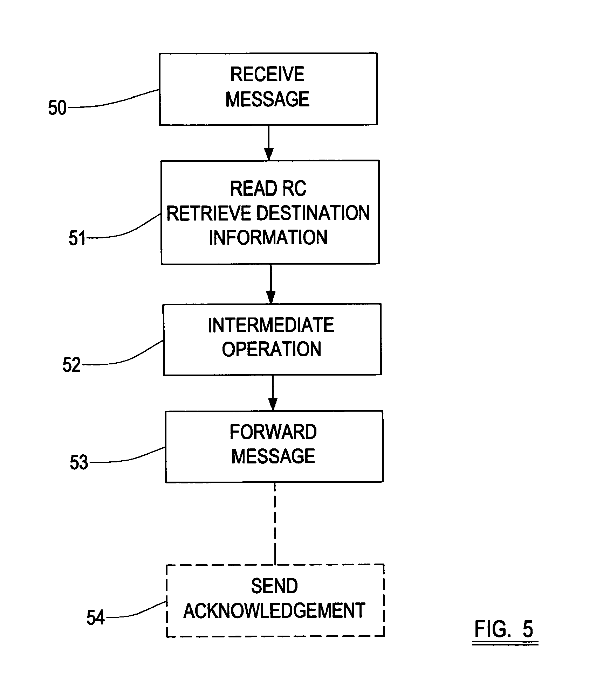

The routing element 40 is thus operable broadly as shown in Figure 5. At step 50, the routing element 40 receives a message over an association established with one of the routing element application server processes 42 or routing element gateway processes 43. At step 51, the routing element 40 is operable to read the message to identify the routing context included in the message, and retrieve the destination information from the store 44. The recipient signalling gateway process 33 or application server process 36 is thus identified. At step 52, the routing element is operable to perform any intermediate operation as desired. This may be any operation that is desirable for messages passed to an application server or, indeed, passed from an application server such as filtering the messages, screening messages or otherwise. At step 53, the message is then forwarded to the appropriate signalling gateway process 33 or application server process 36 over the association established with the appropriate routing element application server process 43 or routing element gateway process 42. At step 54, where appropriate, the receiving routing element application server process 43 or receiving element gateway process 42 may send an appropriate acknowledgement to an originating signalling gateway process 33 or application server process 36. The acknowledgement is preferably in the appropriate format such that an acknowledgement sent to an application server process will be in the form of a response expected from a signalling gateway process, and similarly an acknowledgement sent to a signalling gateway process will be in the form expected from an application server process. The routing element 40 thus appears to the signalling gateways 31, 32 as an application server, and similarly appears to the application servers 34, 35 as a signalling gateway.

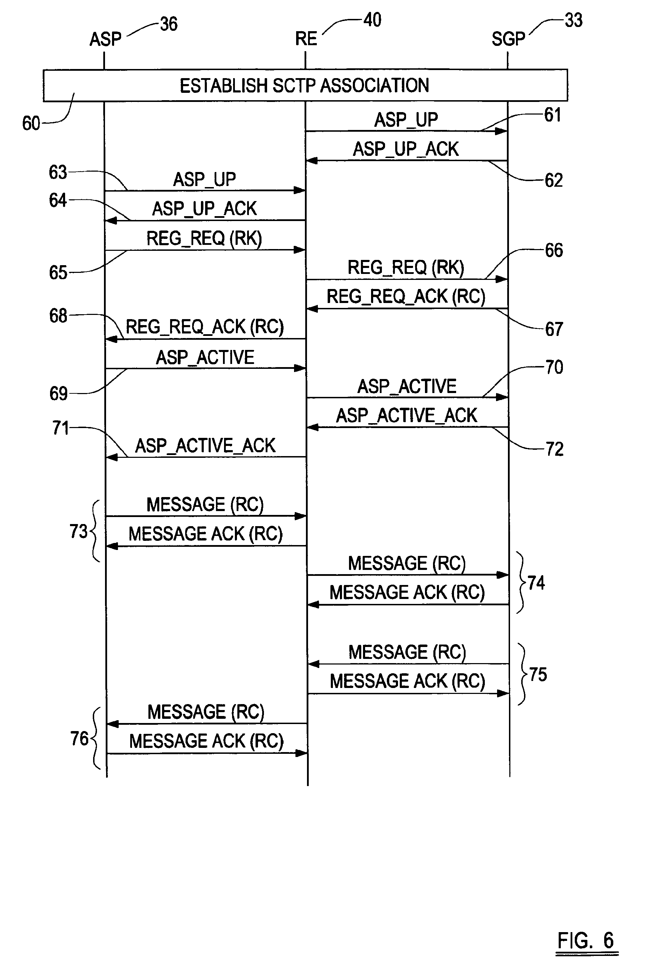

The exchange of messages between a routing element 40 and application server process 36 and a signalling gateway process 33 will now be discussed with reference to Figure 6. At step 60 SCTP associations are established in accordance with, for example, configuration information stored on the routing element 40. At step 61, the routing element 40 sends an ASP_ UP message to the SGP 33 and receives an acknowledgement at 62. Similarly, at step 63 the ASP 36 sends an ASP_UP message to the routing element 40 and receives an acknowledgement 64 in response. In general, the ASP_UP and ASP_UP_ACK exchanges of messages are independent, i.e. the routing element 40 does not have to wait for an ASP_UP message from the ASP 36 before sending an ASP_UP message to the SGP 33. This is generally applicable for most of the messages that can be exchanged using the M3UA protocol, but with some exceptions. The exceptions are the messages required for registration of a routing key and for sending ASP_ACTIVE_ACK messages. At step 65 in Figure 6, the ASP 36 sends a routing by registration message REG_REQ (RK) to the routing element 40, where RK is the value of the routing key to be registered. The routing element 40 will send a corresponding message, shown at 66, to the SGP 33. This ensures that all messages to be sent to the ASP 36 will be sent to the routing element 40. At step 67, the routing element 40 receives the REG_REQ_ACK message from the SGP 33, which includes the routing context RC, i.e. the unique value identifying the routing key. The routing element 40 will store this routing context together with the associated destination information identifying the ASP 36 and SGP 33, and at step 68 send an appropriate REG_REQ_ACK message to the ASP 36 including the routing context RC. The routing element 40 will now be able to correctly direct any messages between the ASP 36 and SGP 33 by reading the routing context included in the messages to be forwarded.

The routing context RC transmitted at step 68 may not necessarily be the same as that received by the routing element at step 67, providing that the routing element 40 stores the corresponding routing contexts and is operable to forward received messages with the correct routing context added.

In the case of the ASP_ACTIVE message, the routing element 40 is operable to receive an ASP_ACTIVE message from the ASP 36, as shown at 69, and forward the message to the SGP 33 shown at 70, but may only generate an acknowledgement in the form of an ASP_ACTIVE_ACK message shown at 71 when the appropriate acknowledgement has been received from the SGP 33 as shown at 72.

Subsequent exchanges of messages are illustrated. At step 73, the application server process 36 generates a message including the routing context RC, that it sends to the routing element and receives an acknowledgement from the routing element 40. At step 74, the routing element 40 forwards the message to the SGP 33 and receives an acknowledgement in response. Similarly, at step 75, the routing element 40 receives a message from the SGP 33, sends an acknowledgement and then forwards a message to the ASP 36 in accordance with the routing context RC and receives a response as generally shown at step 76.

As will be apparent, there will not necessarily be a one to one mapping between ASPs and SGPs, and it is in fact desirable that this is the case.

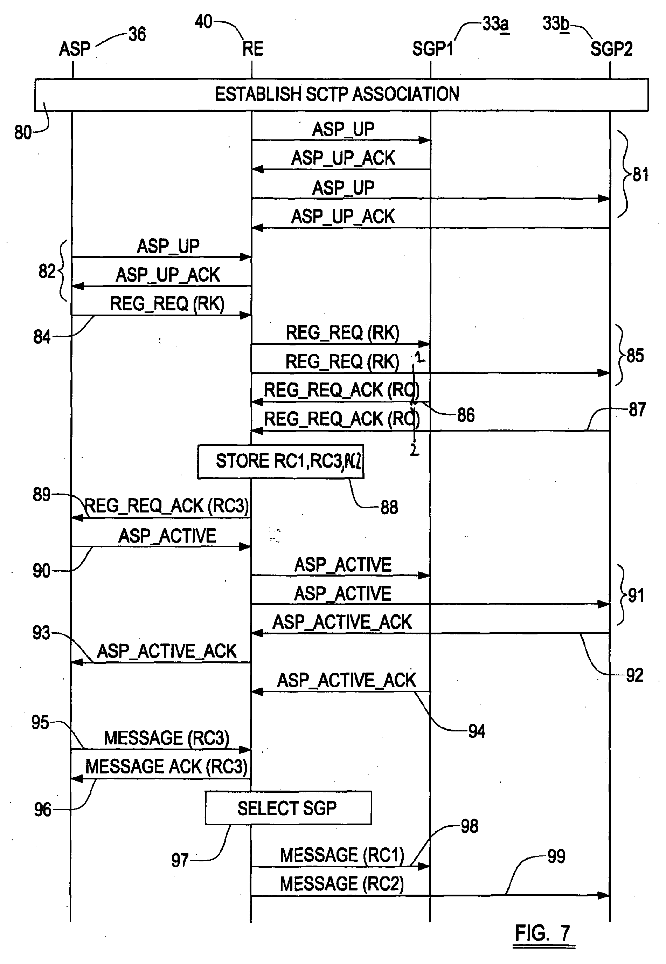

Figure 7 shows a message flow similar to the message flow of Figure 6, but where messages are exchanged between an ASP 36, the routing element 40 and two SGPs 33a, 33b. At step 80, SCTP associations are established in a manner like step 60 of Figure 6, and at step 81 the routing element 40 sends ASP_UP messages to each of the SGP's 33a, 33b and receives an ASP_UP_ACK message from each SGP 33a, 33b. Similarly, at step 82, the routing element 40 and ASP 36 exchange ASP_UP and ASP_UP_ACK messages as in messages 63 and 64 of Figure 6.

At step 84, the ASP 36 sends a routing key registration request message for the routing key RK and at step 85 the routing element 40 sends a message to each of the SGPs 33a, 33b. At step 86, the routing element 40 receives a registration request acknowledgement message REG_REQ_ACK (RC1) from the first SGP 33a including a first routing context RC1 and at step 87 receives a routing key registration request acknowledgement message REG_REQ_ACK (RC2) from the second SGP 33b including a second routing context RC2. At step 88, the routing element 40 stores both routing contexts RC1, RC2 and the mapping between ASP 36 and SGPs 33a, 33b, and at step 89 returns a registration request acknowledgement message with a routing context RC3 to the ASP 36. The ASP 36 will store this routing context RC3 for use in future message exchanges as shown at step 88. The routing context RC3 may differ from each of the routing contexts RC1, RC2 or may equal one of the routing contexts RC1, RC2. The routing element 40 in any case will store the routing contexts RC1, RC2, RC3 and the correlation between them to enable received messages to be forwarded to the correct destination with the correct routing context.

At step 90, the ASP 36 transmits an ASP_ACTIVE message to the routing element 40, and at step 91, this message is forwarded by the routing element 40 to each of the SGP's 33a, 33b. At step 92, one of the SGPs, in this example the second SGP 33b, returns an ASP_ACTIVE_ACK message. As one of the SGPs 33a, 33b has acknowledged the ASP_ACTIVE message, the routing element 40 can now generate an ASP_ACTIVE_ACK message and to transmit it to the ASP 36 as shown at step 93. The routing element 40 receives a subsequent ASP_ACTIVE_ACK message 94 from the other of the SGPs and will store this information to enable it to route subsequent outbound messages.

As shown at step 95, an outbound message from the ASP 36 will include the routing context RC3, and at step 96 the routing element 40 will acknowledge the message. At step 97, the routing element 40 can select to which SGP to forward the message. For example, the SGP may be selected in accordance with the destination point code included in the message or in accordance with a load sharing algorithm, or may be broadcast to all SGPs that returned an ASP_ACTIVE_ACK message, or otherwise. The message will be forwarded to the or each selected SGP using the appropriate routing context and so in this example at step 98 the message is forwarded to the first SGP 33a with routing context RC1, and step 99 is forwarded to the second SGP 33b with routing context RC2. In-bound messages from the SGPs addressed to the ASP 36 will simply be acknowledged by the routing element 40 using the appropriate routing context as illustrated in 75 of Figure 6 and then forwarded to the ASP using the stored routing context RC3 and an acknowledgement received in a manner shown at 76 in Figure 6.

The routing element and method of the present invention thus allows messages to be routed between a plurality of end points on an SS7 network and an application server on an IP network such that all the messages are passed through the routing element. The message handling is transparent both to the application server and to signalling gateways on the IP network. Although the method described above particularly refers to the M3UA protocol, the routing element and method may use the SUA protocol or indeed any other communication protocol as desired.

In the present specification "comprise" means "includes or consists of" and "comprising" means "including or consisting of".

## Claims

1. A routing element (40) to pass messages between an application server (36) and a plurality of signalling gateways (33),
the routing element (40) being operable to:
receive a message from either the application server (36) or a signalling gateway of the plurality of signalling gateways (33), the message comprising routing information,
read the routing information, and
forward the message to the other of the application server (36) and the signalling gateway of the plurality of signalling gateways (33) in accordance with the routing information; wherein the routing element (40) is operable to receive the message from the application server (36) and to send a response to the application server (36) in the format of a response from the signalling gateway (33); and
the routing element (40) is operable to receive the message from the signalling gateway (33) and to send a response to the signalling gateway (33) in the format of a response from the application server (36).

2. A routing element (40) according to claim 1 operable to perform an operation on the message before forwarding the message.

3. A routing element (40) according to claim 1 operable to establish an SCTP association with a signalling gateway process of each of the signalling gateways (33) and an application server process of the application server (36).

4. A routing element (40) according to claim 3 having a routing element server process and a routing element gateway process, where the routing element is operable to establish an SCTP association between the routing element server process and the signalling gateway process of each of the signalling gateways (33) and between the routing element gateway process and the application server process of the application server (36).

5. A routing element (40) according to claim 1 where the routing information comprises a routing context.

6. A routing element (40) according to claim 5 operable to store the routing context and destination information identifying a corresponding signalling gateway process of the signalling gateway (33) and an application server process of the application server (36), the routing element further being operable to read the routing context and forward the message to one of the corresponding signalling gateway process and the application server process.

7. A routing element (40) according to claim 6 operable to receive a routing key registration request from the application server process, forward the routing key registration request to a signalling gateway process, receive an acknowledge comprising a routing context, store the routing context and the destination information identifying the signalling gateway process and the application server process of the application server (36), and forward the acknowledgement to the application server process.

8. A communication network comprising an application server (36), a plurality of signalling gateways (33) and a routing element (40) as claimed in any of claims 1 to 7,

9. A method of passing messages between an application server (36) and a plurality of signalling gateways (33), comprising the steps of;
receiving a message from either the application server (36) or a signalling gateway of the plurality of signalling gateways (33), the message comprising routing information,
reading the routing information, and
forwarding the message to the other of the application server (36) and the signalling gateway of the plurality of signalling gateways (33) in accordance with the routing information;
receiving the message from the application server (36) and sending a response to the application server (36) in the format of a response from the signalling gateway (33); or
receiving the message from the signalling gateway (33) and sending a response to the signalling gateway (33) in the format of a response from the application server (36).

10. A method according to claim 9 comprising performing an operation on the message before forwarding the message.

11. A method according to claim 9 where the routing information comprises a routing context, the method comprising storing the routing context and destination information identifying a corresponding signalling gateway process of the signalling gateway (33) and an application server process of the application server (36), the method further comprising reading the routing context and forwarding the message to one of the corresponding signalling gateway process and the application server process identified in the destination information.

## Patentansprüche

1. Ein Führungselement (40) zum Übermitteln von Nachrichten zwischen einem Anwendungsserver (36) und einer Mehrzahl von Signalisierungsnetzübergängen (33),
wobei das Führungselement (40) betreibbar ist zum:
Empfangen einer Nachricht von entweder dem Anwendungsserver (36) oder dem Signalisierungsnetzübergang der Mehrzahl von Signalisierungsnetzübergängen (33), wobei die Nachricht eine Führungsinformation aufweist,
Lesen der Führungsinformation, und
Weiterleiten der Nachricht an den jeweils anderen von Anwendungsserver (36) und Signalisierungsnetzübergang der Mehrzahl von Signalisierungsnetzübergängen (33) gemäß der Führungsinformation; wobei das Führungselement (40) betreibbar ist, um die Nachricht von dem Anwendungsserver (36) zu empfangen und um eine Antwort an den Anwendungsserver (36) in dem Format einer Antwort von dem Signalisierungsnetzübergang (33) zu senden; und
das Führungselement (40) betreibbar ist, um die Nachricht von dem Signalisierungsnetzübergang (33) zu empfangen und eine Antwort an den Signalisierungsnetzübergang (33) in dem Format einer Antwort von dem Anwendungsserver (36) zu senden.

2. Ein Führungselement (40) gemäß Anspruch 1, das betreibbar ist, um vor dem Weiterleiten der Nachricht eine Operation an der Nachricht durchzuführen.

3. Ein Führungselement (40) gemäß Anspruch 1, das betreibbar ist, um eine SCTP-Zuordnung mit einem Signalisierungsnetzübergangsprozess jedes der Signalisierungsnetzübergänge (33) und einem Anwendungsserverprozess des Anwendungsservers (36) herzustellen.

4. Ein Führungselement (40) gemäß Anspruch 3 mit einem Führungselementserverprozess und einem Führungselementnetzübergangsprozess, wobei das Führungselement betreibbar ist, eine SCTP-Zuordnung zwischen dem Führungselementserverprozess und dem Signalisierungsnetzübergangsprozess jedes der Signalisierungsnetzübergänge (33) und zwischen dem Führungselementnetzübergangsprozess und dem Anwendungsserverprozess des Anwendungsservers (36) herzustellen.

5. Ein Führungselement (40) gemäß Anspruch 1, bei dem die Führungsinformation einen Führungskontext aufweist.

6. Ein Führungselement (40) gemäß Anspruch 5, das betreibbar ist, den Führungskontext und eine Bestimmungsortinformation, die einen entsprechenden Signalisierungsnetzübergangsprozess des Signalisierungsnetz-übergangs (33) und einen Anwendungsserverprozess des Anwendungsservers (36) kennzeichnet, zu speichern, wobei das Führungselement ferner betreibbar ist, den Führungskontext zu lesen und die Nachricht an entweder den entsprechenden Signalisierungsnetzübergangsprozess oder den Anwendungsserverprozess weiterzuleiten.

7. Ein Führungselement (40) gemäß Anspruch 6, das betreibbar ist, um eine Führungsschlüsselregistrierungsanforderung von dem Anwendungsserverprozess zu empfangen, die Führungsschlüsselregistrierungsanforderung an einen Signalisierungsnetzübergangsprozess weiterzuleiten, eine Bestätigung zu empfangen, die einen Führungskontext aufweist, den Führungskontext und die Bestimmungsortinformation, die den Signalisierungsnetzübergangsprozess und den Anwendungsserverprozess des Anwendungsservers (36) kennzeichnet, zu speichern und die Bestätigung an den Anwendungsserverprozess weiterzuleiten.

8. Ein Kommunikationsnetz, das einen Anwendungsserver (36), eine Mehrzahl von Signalisierungsnetzübergängen (33) und ein Führungselement (40) gemäß einem der Ansprüche 1 bis 7 aufweist.

9. Ein Verfahren zum Übermitteln von Nachrichten zwischen einem Anwendungsserver (36) und einer Mehrzahl von Signalisierungsnetzübergängen (33), das die folgenden Schritte aufweist:
Empfangen einer Nachricht von entweder dem Anwendungsserver (36) oder einem Signalisierungsnetzübergang der Mehrzahl von Signalisierungsnetzübergängen (33), wobei die Nachricht eine Führungsinformation aufweist,
Lesen der Führungsinformation, und
Weiterleiten der Nachricht an den jeweils anderen von Anwendungsserver (36) und Signalisierungsnetzübergang der Mehrzahl von Signalisierungsnetzübergängen (33) gemäß der Führungsinformation;
Empfangen der Nachricht von dem Anwendungsserver (36) und Senden einer Antwort an den Anwendungsserver (36) in dem Format einer Antwort von dem Signalisierungsnetzübergang (33); oder
Empfangen der Nachricht von dem Signalisierungsnetzübergang (33) und Senden einer Antwort an den Signalisierungsnetzübergang (33) in dem Format einer Antwort von dem Anwendungsserver (36).

10. Ein Verfahren gemäß Anspruch 9, das ein Durchführen einer Operation an der Nachricht vor dem Weiterleiten der Nachricht aufweist.

11. Ein Verfahren gemäß Anspruch 9, bei dem die Führungsinformation einen Führungskontext aufweist, wobei das Verfahren ein Speichern des Führungskontexts und einer Bestimmungsortinformation, die einen entsprechenden Signalisierungsnetzübergangsprozess des Signalisierungsnetzübergangs (33) und einen Anwendungsserverprozess des Anwendungsservers (36) kennzeichnet, aufweist, wobei das Verfahren ferner ein Lesen des Führungskontexts und ein Weiterleiten der Nachricht an entweder den entsprechenden Signalisierungsnetzübergangsprozess oder den Anwendungsserverprozess, die in der Bestimmungsortinformation **gekennzeichnet** worden sind, aufweist.

## Revendications

1. Élément de routage (40) servant à passer des messages entre un serveur d'application (36) et une pluralité de passerelles de signalisation (33), l'élément de routage (40) fonctionnant de manière à :
➢ recevoir un message du serveur d'application (36) ou d'une passerelle de signalisation de la pluralité de passerelles de signalisation (33), le message comprenant des informations de routage,
➢ lire les informations de routage, et
➢ transmettre le message à l'autre parmi le serveur d'application (36) et la passerelle de signalisation de la pluralité de passerelles de signalisation (33) en conformité avec les informations de routage ; dans lequel l'élément de routage (40) fonctionne de manière à recevoir le message du serveur d'application (36) et envoyer une réponse au serveur d'application (36) dans le format de réponse de la passerelle de signalisation (33) ; et
l'élément de routage (40) fonctionne de manière à recevoir le message de la passerelle de signalisation (33) et envoyer une réponse à la passerelle de signalisation (33) dans le format de réponse du serveur d'application (36).

2. Élément de routage (40) selon la revendication 1 fonctionnant de manière à réaliser une opération sur le message avant de transmettre le message.

3. Élément de routage (40) selon la revendication 1 fonctionnant de manière à établir une association SCTP avec un procédé de passerelle de signalisation de chacune des passerelles de signalisation (33) et un procédé de serveur d'application du serveur d'application (36).

4. Élément de routage (40) selon la revendication 3 ayant un procédé de serveur d'un élément de routage et un procédé de passerelle d'un élément de routage, où l'élément de routage fonctionne de manière à établir une association SCTP entre le procédé de serveur d'un élément de routage et le procédé de passerelle de signalisation de chacune des passerelles de signalisation (33) et entre le procédé de passerelle d'un élément de routage et le procédé de serveur d'application du serveur d'application (36).

5. Élément de routage (40) selon la revendication 1 où les informations de routage comprennent un contexte de routage.

6. Élément de routage (40) selon la revendication 5 fonctionnant de manière à stocker le contexte de routage et les informations de destination identifiant un procédé de passerelle de signalisation correspondant de la passerelle de signalisation (33) et un procédé de serveur d'application du serveur d'application (36), l'élément de routage fonctionnant en outre de manière à lire le contexte de routage et transmettre le message à l'un parmi le procédé de passerelle de signalisation correspondant et le procédé de serveur d'application.

7. Élément de routage (40) selon la revendication 6 fonctionnant de manière à recevoir une demande d'enregistrement de la clé de routage du procédé de serveur d'application, transmettre la demande d'enregistrement de la clé de routage à un procédé de passerelle de signalisation, recevoir un accusé de réception comprenant un contexte de routage, stocker le contexte de routage et les informations de destination identifiant le procédé de passerelle de signalisation et le procédé de serveur d'application du serveur d'application (36), et transmettre l'accusé de réception au procédé de serveur d'application.

8. Réseau de communication comprenant un serveur d'application (36), une pluralité de passerelles de signalisation (33) et un élément de routage (40) selon l'une quelconque des revendications 1 à 7.

9. Procédé servant à passer des messages entre un serveur d'application (36) et une pluralité de passerelles de signalisation (33), comprenant les étapes consistant à :
➢ recevoir un message du serveur d'application (36) ou d'une passerelle de signalisation de la pluralité de passerelles de signalisation (33), le message comprenant des informations de routage,
➢lire les informations de routage, et
➢ transmetre le message à l'autre parmi le serveur d'application (36) et la passerelle de signalisation de la pluralité de passerelles de signalisation (33) en conformité avec les informations de routage ;
➢ recevoir le message du serveur d'application (36) et envoyer une réponse au serveur d'application (36) dans le format de réponse de la passerelle de signalisation (33) ; ou
➢ recevoir le message de la passerelle de signalisation (33) et envoyer une réponse à la passerelle de signalisation (33) dans le format de réponse du serveur d'application (36).

10. Procédé selon la revendication 9 comprenant de réaliser une opération sur le message avant de transmettre le message.

11. Procédé selon la revendication 9 où les informations de routage comprennent un contexte de routage, le procédé comprenant de stocker le contexte de routage et les informations de destination identifiant un procédé de passerelle de signalisation de la passerelle de signalisation (33) et un procédé de serveur d'application du serveur d'application (36), le procédé comprenant en outre de lire le contexte de routage et de transmettre le message à l'un parmi le procédé de passerelle de signalisation correspondant et le procédé de serveur d'application identifié dans les informations de destination.
